(19) Europäisches Patentamt
European Patent Office
Office européen des brevets

(11) Numéro de publication: 0 070 238
A1

(12) # DEMANDE DE BREVET EUROPEEN

(21) Numéro de dépôt: 82401296.7

(22) Date de dépôt: 09.07.82

(51) Int. Cl.³: A 01 N 43/64
//(A01N43/64, 43/54)

(30) Priorité: 15.07.81 FR 8113742

(43) Date de publication de la demande: 19.01.83 Bulletin 83/3

(84) Etats contractants désignés: AT BE CH DE FR GB IT LI LU NL SE

(71) Demandeur: P C U K PRODUITS CHIMIQUES UGINE KUHLMANN
Service Propriété Industrielle Tour Manhattan
F-92087 Paris La Defense 2 Cédex 21(FR)

(72) Inventeur: Boutemy, Gérard Emile Marcel
19 Chemin des Résistants
Oncy Sur Ecole F-91490 Milly La Foret(FR)

(72) Inventeur: Dèvif, Michel Louis
30, rue des Iris
F-69630 Chaponost(FR)

(54) **Compositions herbicides à base de dérivés d'amino-4 chloro-6 alkylthio-5 pyrimidine et de Metribuzin, et procédé de traitement des cultures à l'aide desdites compositions.**

(57) Compositions herbicides contenant, en tant que matières actives, un dérivé d'amino-4 chloro-6 alkylthio-5 pyrimidine de formule:

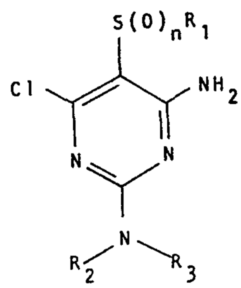

(1)

dans laquelle n est 0, 1 ou 2, $R_1$ est un groupe alkyle 1-5 C, $R_2$ est un atome d'hydrogène ou un groupe alkyle 1-5 C et $R_3$ est un atome d'hydrogène ou un groupe alkyle 1-5 C, et du Metribuzin, le rapport en poids

$$\frac{\text{Composé de formule (I)}}{\text{Metribuzin}}$$

dans les compositions étant de 2 à 5.

EP 0 070 238 A1

Compositions herbicides à base de dérivés d'amino-4 chloro-6 alkylthio-5 pyrimidine et de Metribuzin, et procédé de traitement des cultures à l'aide desdites compositions

La présente invention a pour objet des compositions herbicides contenant, en tant que matières actives,un dérivé d'amino-4 chloro-6 alkylthio-5 pyrimidine répondant à la formule :

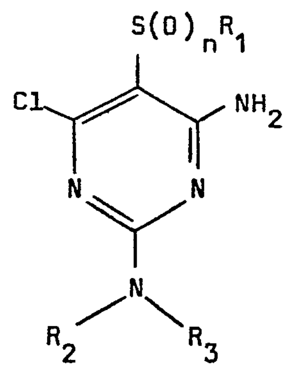

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone et $R_3$ est un atome d'hydrogène ou un groupe alkyle ayant 1 à 5 atomes de carbone, et du Metribuzin ou amino-4 t-butyl-6 dihydro-4,5 méthylthio-3 triazine-1,2,4 one-5.

L'invention concerne également un procédé de destruction des mauvaises herbes dans les cultures de céréales, en particulier le blé, et dans les cultures de maïs mettant en oeuvre lesdites compositions.

Les composés de formule (I) sont des composés herbicides connus, qui ont la propriété de détruire un grand nombre de plantes adventices monocotylédones et dicotylédones dans les cultures de blé, orge, riz et maïs (cf. demandes de brevet au Japon Nos 6335/77 et 92162/77 publiées sous les numéros 92789/78 et 27580/79 et les demandes de brevet européen publiées sous les

numéros 0 000 681 et 0 024 260). Le Metribuzin est également un composé herbicide connu, qui est utilisé en particulier pour la destruction des mauvaises herbes dans les cultures de soja, pommes de terre et betteraves à sucre.

Il a été suggéré dans le brevet français n° 2 447 916 d'associer les composés de formule (I) pour lesquels n est égal à 0, $R_1$ est $CH_3$ et $NR_2R_3$ est un groupe monoalkylamino ou dialkylamino avec le Metribuzin au sein de compositions herbicides, mais ce brevet ne donne aucune indication sur les proportions respectives des deux matières actives dans lesdites compositions et les utilisations desdites compositions.

Comme dérivé de formule (I) utilisable dans les compositions herbicides selon l'invention, on peut citer en particulier la diamino-2,4 chloro-6 méthylthio-5 pyrimidine (composé dénommé A par la suite), l'éthylamino-2 amino-4 chloro-6 méthylthio-5 pyrimidine (composé dénommé B par la suite) et la diamino-2,4 chloro-6 méthylsulfonyl-5 pyrimidine (composé dénommé C par la suite).

Dans les compositions herbicides selon l'invention, le rapport en poids $\frac{\text{composé de formule (I)}}{\text{metribuzin}}$ va de 2 à 5.

Outre les matières actives précédemment citées, les compositions herbicides selon l'invention peuvent contenir les additifs inertes (diluants solides ou liquides, agents dispersants, agents mouillants, agents émulsifiants, tensio-actifs, etc...) habituellement utilisés en agriculture pour diluer les matières actives et faciliter leur mise en suspension aqueuse. De tels additifs inertes sont bien connus de l'homme de l'art. Comme diluants solides, on peut citer en particulier le talc, la silice, le kieselguhr, le kaolin, la craie, la terre de diatomées et l'argile. Comme diluants liquides on peut citer en particulier l'eau, les huiles minérales

et des solvants organiques tels que le benzène et le xylène. Comme agents dispersants, on peut citer les lignosulfonates, en particulier, les lignosulfonates de sodium, et les sels de sodium des produits de condensation d'acides naphtalènesulfoniques avec le formaldéhyde, par exemple les sels de sodium des produits de condensation de l'acide naphtalènesulfonique et du formaldéhyde et les sels de sodium des produits de condensation ternaires d'acide naphtalènesulfonique, d'acide phénolsulfonique et de formaldéhyde. Comme agents mouillants, agents émulsifiants et tensio-actifs, on peut citer des composés non-ioniques tels que les esters partiels d'acides gras et de sorbitan connus sous la marque de commerce Span, les produits de condensation des esters précédents avec l'oxyde d'éthylène connus sous la marque de commerce Tween, les produits de condensation d'oxyde d'éthylène et d'oxyde de propylène connus sous la marque de commerce Pluronic et les produits de condensation de l'oxyde d'éthylène avec des alkylphénols ou avec des alcools gras comme l'alcool laurique, l'alcool oléique et l'alcool cétylique, et des composés anioniques tels que les alkylsulfonates de sodium connus sous la marque de commerce Ekazol, les alkylarylsulfonates de métaux alcalins comme le dodécylbenzènesulfonate de sodium et le dibutylnaphtalènesulfonate de sodium, et les sels alcalins des sulfates d'alcools gras.

Les compositions herbicides selon l'invention peuvent se présenter sous forme de granulés solides, poudres pour poudrage, poudres mouillables, suspensions aqueuses, émulsions ou solutions dans un solvant organique. Elles sont présentées de préférence sous forme de poudres mouillables contenant, outre les matières actives, un diluant solide (charge), un agent dispersant et un agent mouillant.

Pour préparer les compositions selon l'invention, on mélange intimement, suivant des procédés connus en soi, les divers constituants, c'est-à-dire les deux matières actives et éventuellement les additifs inertes, les deux matières actives étant introduites dans les proportions indiquées précédemment.

Les compositions selon l'invention présentent un effet de synergie sur des plantes adventices telles que le vulpin, la véronique, la stellaire, l'amarante, la renouée et le panic et sont donc particulièrement utiles pour la destruction de ces plantes adventices dans les cultures, en particulier dans les cultures de céréales et de maïs. L'efficacité herbicide des compositions selon l'invention vis-à-vis des plantes adventices précédemment citées est nettement supérieure à celle que l'on pourrait attendre à partir des résultats obtenus avec le composé de formule (I) seul et avec le Métribuzin seul. Un tel effet est inattendu.

Les compositions selon l'invention conviennent pour le désherbage des céréales, en particulier du blé, et pour le désherbage du maïs. Pour le désherbage des céréales et du maïs, les compositions selon l'invention peuvent être appliquées sur le sol après les semis de la plante culture et en pré-levée de la plante culture ou bien être appliquées sur le sol et les plantes en post-levée de la plante culture. La dose totale de matières actives appliquée est de préférence 600 g/ha à 800 g/ha dans le cas des céréales et 1 000 g/ha à 1 200 g/ha dans le cas du maïs.

Les exemples suivants illustrent l'invention sans la limiter :

EXEMPLE 1 : Désherbage des cultures de blé (application de pré-levée)

Les matières actives employées sont soit le composé de formule (I) seul, soit le Métribuzin seul, soit des mélanges contenant le composé de formule (I) et le Métribuzin dans le rapport pondéral 2 ou 3.
Les matières actives sont formulées sous forme de poudres mouillables ayant la compositions donnée dans le tableau T1 ci-après (les pourcentages sont en poids). Ces poudres mouillables sont diluées dans l'eau avant emploi et les bouillies aqueuses ainsi obtenues sont pulvérisées, à raison de 400 l/ha et en pré-levée de la plante culture, sur le sol où ont été effectués des semis de blé d'hiver. Les dilutions sont calculées de façon à apporter les doses de matière active indiquées dans le tableau T2.

| Poudre mouillable | Composé de formule (I) | | Métribuzin % | Agent mouillant (Pluronic L 92) % | Agent dispersant (lignosulfonate de sodium) % | Charge | |
|---|---|---|---|---|---|---|---|
| | Nature | % | | | | Silice précipitée % | Talc % |
| 1 | Composé A | 15 % | 0 % | 1,5 % | 4 % | 0,5 % | 79 % |
| 2 | Composé B | 10 % | 0 % | 1,5 % | 4 % | 0,5 % | 84 % |
| 3 | Composé C | 15 % | 0 % | 1,5 % | 4 % | 0,5 % | 79 % |
| 4 | - | 0 % | 5 % | 1,5 % | 4 % | 0,5 % | 89 % |
| 5 | Composé A | 15 % | 5 % | 1,5 % | 4 % | 0,5 % | 74 % |
| 6 | Composé B | 10 % | 5 % | 1,5 % | 4 % | 0,5 % | 79 % |
| 7 | Composé C | 15 % | 5 % | 1,5 % | 4 % | 0,5 % | 74 % |

TABLEAU T 1

Deux mois après l'application des produits, on compare l'état des parcelles traitées à celui de parcelles témoins non traitées, lesquelles sont envahies de plantes adventices telles que la véronique (Veronica sp.), la pensée (Viola tricolor), le vulpin (Alopecurus myosuroïdes), la stellaire (Stellaria media), la renouée (Polygonum sp.) et le coquelicot (Papaver rhoeas). De cette comparaison, on déduit d'une part l'efficacité herbicide des produits vis-à-vis des plantes adventices et d'autre part le degré de phytotoxicité des produits vis-à-vis de la plante culture. L'efficacité herbicide vis-à-vis des plantes adventices est exprimée par une note de 0 à 10, 0 correspondant à une efficacité herbicide nulle et 10 à une destruction totale des plantes adventices. La phytotoxicité vis-à-vis de la plante culture est également exprimée par une note de 0 à 10, 0 correspondant à une phytotoxicité nulle (c'est-à-dire que la plante culture est aussi saine dans les parcelles traitées que dans les parcelles témoins non traitées) et 10 correspondant à une destruction totale de la plante culture. Les résultats obtenus sont rassemblés dans le tableau T2 ci-après.

Dans le tableau T2 figurent également, dans la colonne efficacité herbicide calculée, les valeurs que l'on obtiendrait pour les compositions contenant simultanément le composé de formule (I) et le Metribuzin dans le cas d'une simple additivité des effets des composants. Les valeurs calculées sont obtenues à l'aide de la formule :

$$E_{XY} = E_X + E_Y - \frac{E_X \cdot E_Y}{10}$$

dans laquelle $E_X$ est l'efficacité herbicide du produit X appliqué à la dose m g/ha, $E_Y$ est l'efficacité herbicide du produit Y appliqué à la dose n g/ha et $E_{XY}$ est l'efficacité herbicide additive à laquelle on peut s'attendre lorsqu'on applique simultanément m g/ha du produit X et n g/ha du produit Y.

La comparaison des valeurs calculées et des valeurs observées montre que les compositions selon l'invention contenant un composé de formule (I) choisi parmi les composés A, B et C et du Metribuzin présentent un effet de synergie. L'efficacité herbicide observée pour ces compositions est supérieure à l'efficacité herbicide additive $E_{XY}$.

EXEMPLE 2 : Désherbage des cultures de blé (application de post-levée)

Les matières actives employées sont les mêmes qu'à l'exemple 1 et sont formulées de la même manière qu'à l'exemple 1 (cf. le tableau T1). Les poudres mouillables sont diluées dans l'eau avant emploi et les bouillies aqueuses obtenues sont pulvérisées, à raison de 400 l/ha, sur des cultures de blé d'hiver au stade début tallage. Les dilutions sont calculées de façon à apporter les doses de matière active indiquées dans le tableau T3.

45 jours après l'application des produits, on compare l'état des parcelles traitées à celui des parcelles témoins non traitées, lesquelles sont envahies par les plantes adventices indiquées à l'exemple 1. De cette comparaison on déduit l'efficacité herbicide des produits vis-à-vis des plantes adventices et leur degré de phytotoxicité vis-à-vis de la plante culture, le système de notation employé étant le même qu'à l'exemple 1. Les résultats obtenus sont rassemblés dans le tableau T3 ci-après.

Dans le tableau T3 figure également l'efficacité herbicide calculée, évaluée suivant la méthode exposée à l'exemple 1. La comparaison des valeurs calculées et des valeurs observées montre que les compositions selon l'invention contenant un composé de formule (I) choisi parmi les composés A, B et C et du Metribuzin présentent un effet de synergie. L'efficacité herbicide observée pour ces compositions est supérieure à l'efficacité herbicide additive $E_{XY}$.

EXEMPLE 3 : Désherbage des cultures de maïs (application de pré-levée)

Les matières actives employées sont soit le composé de formule (I) seul, soit le Metribuzin seul, soit des mélanges contenant le composé de formule (I) et le Metribuzin dans le rapport pondéral 4 ou 5.

Les matières actives sont formulées sous forme de poudres mouillables ayant la composition donnée dans le tableau T4 ci-après (les pourcentages sont en poids). Ces poudres mouillables sont diluées dans l'eau avant emploi et les bouillies aqueuses ainsi obtenues sont pulvérisées, à raison de 400 l/ha et en pré-levée de la plante culture, sur le sol où ont été effectués des semis de maïs. Les dilutions sont calculées de façon à apporter les doses de matière active indiquées dans le tableau T5.

45 jours après l'application des produits, on compare l'état des parcelles traitées à celui de parcelles témoins non traitées, lesquelles sont envahies de plantes adventices telles que le chénopode (Chenopodium sp.), l'amarante (Amaranthus sp.), la renouée (Polygonum sp.), le panic (Panicum sp.) et la morelle (Solanum nigrum). De cette comparaison on déduit d'une part l'efficacité herbicide des produits vis-à-vis des plantes adventices et d'autre part le degré de phytotoxicité des produits vis-à-vis de la plante culture. L'efficacité herbicide vis-à-vis des plantes adventices est exprimée par une note de 0 à 10, 0 correspondant à une efficacité herbicide nulle et 10 à une destruction totale des plantes adventices. La phytotoxicité vis-à-vis de la plante culture est également exprimée par une note de 0 à 10, 0 correspondant à une phytotoxicité nulle (c'est-à-dire que la plante culture est aussi saine dans les parcelles traitées que dans les parcelles témoins non traitées) et 10 correspondant à une destruction totale de la plante culture. Les résultats obtenus sont rassemblés dans le tableau T5 ci-après.

Dans le tableau T5 figurent également, dans la colonne efficacité herbicide calculée, les valeurs que l'on obtiendrait pour les compositions contenant simultanément le composé de formule (I) et le Metribuzin dans le cas d'une simple additivité des effets des composants. L'efficacité herbicide calculée est évaluée suivant la méthode exposée à l'exemple 1. La comparaison des valeurs calculées et des valeurs observées montre que les compositions selon l'invention contenant un composé de formule (I) choisi parmi les composés A, B et C et du Metribuzin présentent un effet de synergie.

<u>EXEMPLE 4</u> : Désherbage des cultures de maïs (application de post-levée)

Les conditions sont identiques à celles de l'exemple 3, sauf que les bouillies aqueuses sont pulvérisées sur les cultures de maïs au stade 3 feuilles.

L'efficacité herbicide des produits vis-à-vis des plantes adventices (morelle, panic,renouée, chénopode, amarante en particulier) et leur phytotoxicité vis-à-vis de la plante culture sont évaluées 45 jours après l'application des produits, selon la méthode décrite à l'exemple 3.

Les résultats obtenus sont rassemblés dans le tableau T6 où figurent également les efficacités herbicides calculées. La comparaison des valeurs calculées et des valeurs observées montre que les compositions selon l'invention présentent un effet de synergie.

| Poudre mouillable appliquée | Dose de matière active apportée en g/ha | Phytotoxicité vis-à-vis de la plante culture (blé d'hiver) | Efficacité herbicide vis-à-vis des plantes adventices | |
|---|---|---|---|---|
| | | | Observée | Calculée |
| 1 | 600 (Composé A) | 0 | 3,5 | - |
| 2 | 400 (Composé B) | 0 | 6 | - |
| 3 | 600 (Composé C) | 0 | 4,5 | - |
| 4 | 200 (Metribuzin) | 0 | 6,5 | - |
| 5 | 600 (Composé A) + 200 (Metribuzin) | 0,7 | 8,4 | 7,7 |
| 6 | 400 (Composé B) + 200 (Metribuzin) | 0,9 | 9 | 8,6 |
| 7 | 600 (Composé C) + 200 (Metribuzin) | 0,4 | 8,6 | 8,1 |

TABLEAU T2

| Poudre mouillable appliquée | Dose de matière active apportée en g/ha | Phytotoxicité vis-à-vis de la plante culture (blé d'hiver) | Efficacité herbicide vis-à-vis des plantes adventices | |
|---|---|---|---|---|
| | | | Observée | Calculée |
| 1 | 600 (composé A) | 0 | 4 | - |
| 2 | 400 (composé B) | 0 | 6,5 | - |
| 3 | 600 (composé C) | 0 | 4,5 | - |
| 4 | 200 (Metribuzin) | 0 | 6,5 | - |
| 5 | 600 (composé A) + 200 (Metribuzin) | 1 | 8,5 | 7,9 |
| 6 | 400 (composé B) + 200 (Metribuzin) | 1,2 | 9,4 | 8,7 |
| 7 | 600 (composé C) + 200 (Metribuzin) | 0,9 | 8,6 | 8,1 |

TABLEAU T3

| Poudre mouillable | Composé de formule (I) | | Métribuzin % | Agent mouillant (Pluronic L 92) % | Agent dispersant (lignosulfonate de sodium) % | Charge | |
|---|---|---|---|---|---|---|---|
| | Nature | % | | | | Silice précipitée % | Talc % |
| 8 | Composé A | 25 % | 0 % | 1,5 % | 4 % | 0,5 % | 69 % |
| 9 | Composé B | 20 % | 0 % | 1,5 % | 4 % | 0,5 % | 74 % |
| 10 | Composé C | 25 % | 0 % | 1,5 % | 4 % | 0,5 % | 69 % |
| 11 | - | 0 % | 5 % | 1,5 % | 4 % | 0,5 % | 89 % |
| 12 | Composé A | 25 % | 5 % | 1,5 % | 4 % | 0,5 % | 64 % |
| 13 | Composé B | 20 % | 5 % | 1,5 % | 4 % | 0,5 % | 69 % |
| 14 | Composé C | 25 % | 5 % | 1,5 % | 4 % | 0,5 % | 64 % |

TABLEAU T4

| Poudre mouillable appliquée | Dose de matière active apportée en g/ha | Phytotoxicité vis-à-vis de la plante culture (maïs) | Efficacité herbicide vis-à-vis des plantes adventices | |
|---|---|---|---|---|
| | | | Observée | Calculée |
| 8 | 1 000 (Composé A) | 0 | 5,5 | - |
| 9 | 800 (Composé B) | 0 | 6,5 | - |
| 10 | 1 000 (Composé C) | 0 | 5 | - |
| 11 | 200 (Metribuzin) | 0 | 6 | - |
| 12 | 1 000 (Composé A) + 200 (Metribuzin) | 0,5 | 8,8 | 8,2 |
| 13 | 800 (Composé B) + 200 (Metribuzin) | 0,4 | 9,3 | 8,6 |
| 14 | 1 000 (Composé C) + 200 (Metribuzin) | 0,6 | 8,7 | 8 |

TABLEAU T5

| Poudre mouillable appliquée | Dose de matière active apportée en g/ha | Phytotoxicité vis-à-vis de la plante culture (maïs) | Efficacité herbicide vis-à-vis des plantes adventices | |
|---|---|---|---|---|
| | | | Observée | Calculée |
| 8 | 1 000 (Composé A) | 0 | 5 | - |
| 9 | 800 (Composé B) | 0 | 6,5 | - |
| 10 | 1 000 (Composé C) | 0 | 5 | - |
| 11 | 200 (Metribuzin) | 0 | 6 | - |
| 12 | 1 000 (Composé A) + 200 (Metribuzin) | 0,3 | 9 | 8 |
| 13 | 800 (Composé B) + 200 (Metribuzin) | 0,4 | 9,5 | 8,6 |
| 14 | 1 000 (Composé C) + 200 (Metribuzin) | 0,2 | 9 | 8 |

TABLEAU T6

Revendications de brevet

1. Compositions herbicides caractérisées en ce qu'elles contiennent simultanément, comme matières actives, un dérivé d'amino-4 chloro-6 alkylthio-5 pyrimidine de formule :

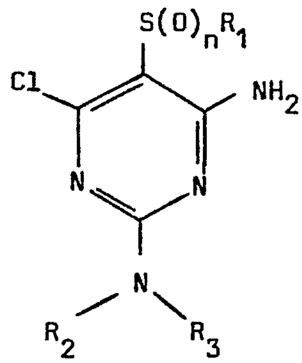

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone et $R_3$ est un atome d'hydrogène ou un groupe alkyle ayant 1 à 5 atomes de carbone, et du Metribuzin, le rapport en poids $\frac{\text{composé de formule (I)}}{\text{metribuzin}}$ dans les compositions étant de 2 à 5.

2. Compositions herbicides selon la revendication 1, caractérisées en ce que le composé de formule (I) est choisi parmi la diamino-2,4 chloro-6 méthylthio-5 pyrimidine, l'éthylamino-2 amino-4 chloro-6 méthylthio-5 pyrimidine et la diamino-2,4 chloro-6 méthylsulfonyl-5 pyrimidine.

3. Compositions herbicides selon l'une quelconque des revendications 1 et 2, caractérisées en ce qu'elles se présentent sous forme de poudres mouillables contenant, outre les matières actives, un diluant solide, un agent dispersant, et un agent mouillant.

4. Procédé de destruction du vulpin, de la véronique, de la stellaire, de l'amarante, de la renouée et du panic dans les cultures de céréales et de maïs, caractérisé en ce qu'on applique soit sur le sol, après les semis de la plante culture et en pré-levée de la plante culture, soit sur le sol et les plantes, en post-levée de la plante culture, une composition telle que définie dans chacune des revendications 1 à 3.

5. Procédé selon la revendication 4, caractérisé en ce que la composition appliquée est sous forme d'une bouillie aqueuse.

6. Procédé selon l'une quelconque des revendications 4 et 5, caractérisé en ce que la dose totale de matières actives appliquée est de 600 g/ha à 800 g/ha dans le cas des céréales et de 1 000 g/ha à 1 200 g/ha dans le cas du maïs.

0070238

Office européen des brevets

# RAPPORT DE RECHERCHE EUROPEENNE

Numéro de la demande

EP 82 40 1296

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | |
| X | FR-A-2 447 916 (MITSUI TOATSU CHEMICALS) * revendications; page 3, ligne 7 * | 1-6 | A 01 N 43/64 // (A 01 N 43/64 A 01 N 43/54 ) |
| | ----- | | |
| | | | **DOMAINES TECHNIQUES RECHERCHES (Int. Cl. 3)** |
| | | | A 01 N |

Le présent rapport de recherche a été établi pour toutes les revendications

| Lieu de la recherche | Date d'achèvement de la recherche | Examinateur |
|---|---|---|
| LA HAYE | 12-10-1982 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons

& : membre de la même famille, document correspondant